# FASCICULE DE BREVET EUROPEEN

(11) **EP 0 570 315 B1**
(45) Date de publication et mention de la délivrance du brevet: **21.01.1998**
(21) Numéro de dépôt: 93440040.9
(22) Date de dépôt: 14.05.1993
(51) Int. Cl.: A01B 63/22, A01B 63/32, B60G 17/005

(54) **Machine agricole, notamment faucheuse, avec un dispositif de délestage et de levage perfectionné**
Landwirtschaftliche Maschine, insbesondere Mähmaschine, mit einer verbesserten Vorrichtung zum Entlasten und zum Anheben
Agricultural implement, especially mower, with an improved lightening and raising device

(30) Priorité: 14.05.1992 FR 9206018
(43) Date de publication de la demande: 18.11.1993
(73) Titulaire: KUHN S.A., F-67700 Saverne (FR)
(72) Inventeur: Walch, Martin, W-67490 Dettwiller (DE); Wattron, Bernard, W-67700 Haegen (DE)

(56) Documents cités:
- EP-A- 0 304 618
- DE-A- 2 038 744
- DE-A- 3 139 936
- DE-U- 8 907 918
- DE-U- 9 005 599
- FR-A- 1 319 825
- FR-A- 2 372 352
- FR-A- 2 485 322
- FR-A- 2 614 755
- PATENT ABSTRACTS OF JAPAN vol. 7, no. 217 (M-245)27 Septembre 1983

## Description

La présente invention concerne une machine agricole comportant un mécanisme de récolte et au moins un dispositif de délestage et de levage. Ce dispositif de délestage et de levage est destiné, durant le travail, à délester ledit mécanisme de récolte et, en vue du transport, à lever ledit mécanisme de récolte. Ce dispositif de délestage et de levage comporte un vérin de levage monté en parallèle avec un élément élastiquement déformable.

Le document **DE 31 39 936 A1** montre une machine agricole s'appuyant sur le sol au moyen de deux roues. Celles-ci sont liées chacune au châssis de la machine au moyen d'un bras de roue correspondant fixé à un arbre pivotant. Les deux arbres pivotants sont coaxiaux et sont articulés sur le châssis de sorte à autoriser un pivotement desdits bras de roue et des roues correspondantes autour de leur axe géométrique commun.

Cette machine connue comporte également un vérin de levage et un ressort cylindrique de compression s'étendant dans le voisinage de la première roue.

Le vérin de levage est implanté entre le châssis et un levier articulé sur l'axe géométrique commun des deux arbres pivotants. Ce levier présente deux plots dont l'un est destiné à agir sur le bras de roue de la première roue et dont l'autre est destiné à agir sur un bras de levier solidaire de l'arbre pivotant auquel est fixé le bras de roue de la deuxième roue. A cet effet, le bras de roue de la première roue et ledit bras de levier comportent chacun un logement en forme de U ouvert vers le haut dans lequel peut se loger le plot correspondant.

Le ressort, quant à lui, est implanté entre le châssis et la partie médiane d'un organe de couplage. Cet organe de couplage est lié, à l'une de ses extrémités, à l'extrémité libre du bras de levier au moyen d'une articulation d'axe géométrique parallèle à l'axe géométrique commun des deux arbres pivotants. A son autre extrémité, ledit organe de couplage repose sur une excroissance du bras de roue de la première roue.

Pour lever le châssis par rapport au sol, on allonge le vérin de levage. Le châssis se lèvera dès que les plots seront en appui sur le fond des logements.

Pour amener le châssis en position de travail, on raccourcit le vérin de levage jusqu'à ce que le bras de levier et le bras de roue de la première roue puissent pivoter d'un certain angle autour de l'axe géométrique commun des deux arbres pivotants. Dans la position de travail, les deux roues sont ainsi soumises à l'action du ressort, ce qui a pour effet de délester le châssis, lequel repose donc moins lourdement sur le sol. En position de travail, chaque roue peut également se déplacer individuellement en hauteur par pivotement autour de l'axe géométrique de son arbre pivotant correspondant. Chaque roue peut ainsi s'adapter au relief du sol sur lequel elle roule pendant le travail.

Dans cette machine agricole connue, l'adaptation de chaque roue au relief du sol peut, en théorie, se faire sans que le vérin de levage ait à s'allonger ou à se raccourcir. Compte tenu des conditions dans lesquelles travaillent de telles machines agricoles, il est cependant fort probable que le jeu fonctionnel existant entre les plots et les logements correspondants, risque d'être rapidement obstrué, de sorte que le dispositif ne pourra plus remplir correctement sa fonction.

Il convient encore de noter que le dispositif de délestage et de levage de cette machine connue est relativement complexe.

Il convient enfin de noter que dans cette machine connue, l'encombrement du dispositif de délestage et de levage est relativement important.

Dans le document **DE-U 90 05 599** qui constitue l'état de la technique le plus proche, est décrite une faucheuse comportant notamment un mécanisme de coupe qui s'appuie sur le sol notamment au moyen de deux roues.

Chaque roue est liée au châssis du mécanisme de coupe par l'intermédiaire d'un bras de roue correspondant, lui-même lié au châssis au moyen d'une articulation d'axe de pivotement horizontal.

Une partie du poids du mécanisme de coupe est transférée sur chaque roue par l'intermédiaire d'un dispositif de délestage et de levage. Celui-ci est constitué pour l'essentiel d'un ressort et d'un vérin de levage.

Le ressort qui est un ressort mécanique de compression, est implanté entre un support de ressort supérieur et un support de ressort inférieur. Le support de ressort supérieur est lié de manière réglable au cylindre du vérin de levage correspondant. Le support de ressort inférieur, quant à lui, est guidé sur la tige dudit vérin de levage et est lié au moyen d'un axe de liaison inférieur à des pattes solidaires du bras de roue correspondant.

Le cylindre du vérin de levage est lié, à son extrémité supérieure, au chassis par l'intermédiaire d'un axe de liaison supérieur. Dans l'extrémité de la tige s'étendant au-dehors du cylindre, est prévu un trou allongé au travers duquel s'étend l'axe de liaison inférieur. Chaque vérin de levage comporte par ailleurs un piston coulissant dans le cylindre et solidaire de l'extrémité de la tige s'étendant à l'intérieur dudit cylindre.

Durant le travail, l'axe de liaison inférieur de chaque dispositif de délestage et de levage se trouve dans la partie médiane du trou allongé correspondant. Le ressort correspondant peut ainsi transférer une partie du poids du mécanisme de coupe sur la roue respective dont le bras de roue peut quelque peu pivoter par rapport au châssis du mécanisme de coupe sans que le vérin de levage associé s'allonge ou se raccourcisse.

Pour le transport, on alimente en huile, à partir d'une source hydraulique, la grande chambre du premier vérin de levage pour allonger celui-ci. Ce faisant, l'huile contenue dans la petite chambre du premier vérin de levage est transvasée dans la grande chambre du deuxième vérin de levage lequel est donc également allongé, tandis que l'huile contenue dans la petite chambre du deuxième vérin de levage retourne à la source hydraulique. Lorsque les deux vérins de levage sont allongés au maximum, le mécanisme de coupe est levé à une hauteur suffisante permettant son transport sans contact avec le sol.

Etant donné que chaque dispositif de délestage et de levage de cette faucheuse connue comporte un vérin de levage monté en parallèle avec un ressort entourant le cylindre dudit vérin de levage, ledit dispositif de délestage et de levage est relativement compact.

Le délestage et l'adaptation au relief du terrain peuvent du reste se faire sans qu'il soit nécessaire, pour cela, que les vérins de levage aspirent ou refoulent de l'huile puisque la tige de ces derniers comporte un trou allongé.

Toutefois, la longueur relativement réduite de ces trous allongés n'autorise qu'une adaptation relativement limitée au relief du terrain.

Par ailleurs, ces trous allongés risquent d'être rapidement obstrués par des accumulations de terre et/ou de résidus végétaux, notamment lorsque la faucheuse travaille dans des terrains relativement humides et collants. On comprendra, dès lors, que la faculté d'adaptation au relief du terrain et le délestage risquent d'être tout simplement annulés.

Le but de la présente invention est de remédier aux inconvénients que présente le dispositif de délestage et de levage de la machine agricole constituant l'état de la technique le plus proche.

A cet effet, la machine agricole selon la présente invention, qui comporte un mécanisme de récolte et au moins un dispositif de délestage et de levage destiné, durant le travail, à délester ledit mécanisme de récolte et, en vue du transport à lever ledit mécanisme de récolte, ledit (chaque) dispositif de délestage et de levage comportant un vérin de levage monté en parallèle avec un élément élastiquement déformable implanté au moins sensiblement coaxialement sur ledit vérin de levage, ce dernier comprenant :
- un cylindre,
- une tige guidée dans ledit cylindre et débouchant dudit cylindre, et
- un piston monté coulissant dans le cylindre et séparant le cylindre en deux chambres distinctes, une première chambre étant destinée à être alimentée en fluide à partir d'une source d'alimentation de sorte à translater le piston dans le cylindre pour lever ledit mécanisme de récolte,
est caractérisée en ce que ladite tige s'étend, quelle que soit sa position, entièrement au travers de l'espace intérieur du cylindre, et en ce que ledit piston est désolidarisé de ladite tige et est monté coulissant sur celle-ci, ladite tige comportant une butée contre laquelle le piston est destiné à venir s'appuyer, de telle sorte :
- que, durant le travail, la tige puisse coulisser dans le cylindre sans que la butée de ladite tige touche le piston, ce qui autorise un fonctionnement normal de l'élément élastiquement déformable pour délester le mécanisme de récolte
   et
- qu'en vue du transport le piston soit amené en contact avec la butée de la tige sous l'action du fluide de la source d'alimentation, afin de déplacer ladite tige par rapport au cylindre pour lever ledit mécanisme de récolte.

Le dispositif de délestage et de levage équipant la machine agricole selon l'invention, permet ainsi au mécanisme de récolte de se déplacer aisément en hauteur pour s'adapter au relief du terrain quelles que soient les conditions dans lesquelles travaille ladite machine agricole (pas de risques d'obstructions).

Comme du reste, la tige du vérin de levage s'étend entièrement au travers de la deuxième chambre du cylindre dudit vérin de levage, le déplacement de ladite tige dans le premier mode de fonctionnement n'entraîne aucune variation du volume de fluide contenu dans ladite deuxième chambre du vérin. Il n'y a donc aucune aspiration et aucun refoulement de fluide durant ce déplacement.

Dans le document **FR 2 372 352** est décrit un amortisseur hydraulique rétractable.

Cet amortisseur connu comporte un cylindre dans lequel un premier piston, solidaire de l'extrémité intérieure d'une tige et muni de passages, peut y être déplacé. La tige sort du cylindre en traversant un premier couvercle. L'autre extrémité du cylindre est obturée par un second couvercle dans lequel sont prévus des passages mettant en communication le liquide d'amortissement contenu dans le cylindre avec celui contenu dans un réservoir entourant extérieurement le cylindre.

Sur la tige est du reste monté un deuxième piston qui peut coulisser dans le cylindre et sur la tige. Ce deuxième piston divise le cylindre en deux chambres : une première chambre destinée à être alimentée en fluide par un passage prévu dans le premier couvercle et une deuxième chambre qui constitue la chambre d'amortissement et qui est partagée par le premier piston en une première chambre d'amortissement s'étendant entre ledit premier piston et le deuxième piston, et en une deuxième chambre d'amortissement s'étendant de l'autre côté du premier piston.

Pendant le fonctionnement de l'amortisseur (premier mode opératoire), le deuxième piston reste dans la position adjacente au premier couvercle (dans ce mode opératoire, la première chambre est vide ou quasiment vide) et le premier piston et la tige peuvent se mouvoir dans le cylindre. Pendant la course du premier piston en direction du deuxième piston, du liquide d'amortissement est transmis sous pression de la première chambre d'amortissement dans la deuxième chambre d'amortissement à travers les passages du premier piston. Le manque de volume de liquide dans la deuxième chambre dû au volume de la tige sortant est compensé par le liquide contenu dans le réservoir et pénétrant dans la deuxième chambre d'amortissement au travers des passages prévus dans le second couvercle. Inversement, pendant l'éloignement du premier piston du deuxième piston, du liquide d'amortissement coule de la deuxième chambre d'amortissement vers la première chambre d'amortissement au travers des passages du premier piston, tandis que le surplus de liquide dans le cylindre dû à l'entrée du volume de la tige est transmis sous pression vers le réservoir au travers des passages prévus dans le second couvercle.

Pour raccourcir l'amortisseur, on alimente la première chambre en fluide au travers du passage prévu à cet effet dans le premier couvercle. Ce faisant, le deuxième piston est déplacé en direction du premier piston. Lorsque le deuxième piston arrive en butée sur le premier piston, ce dernier est déplacé conjointement avec la tige qui rentre alors dans le cylindre jusqu'à ce que le premier piston bute sur le second couvercle du cylindre situé du côté du réservoir. L'amortisseur est alors rétracté au maximum.

Il convient tout d'abord de noter que cet amortisseur ne comporte pas de vérin combiné avec un organe élastiquement déformable. Il ne s'agit donc pas d'un dispositif capable d'assurer une fonction de délestage.

Cet amortisseur comporte certes :
- un cylindre,
- une tige guidée dans ledit cylindre et débouchant de celui-ci, et
- un deuxième piston monté coulissant dans le cylindre et séparant celui-ci en deux chambres distinctes dont une première chambre qui est destinée à être alimentée en fluide à partir d'une source d'alimentation, de sorte à translater le deuxième piston dans le cylindre dans le but de lever un organe, ledit deuxième piston étant séparé de la tige et étant monté coulissant sur celle-ci, ladite tige comprenant une butée (premier piston) contre laquelle le deuxième piston est destiné à venir s'appuyer.

De cette sorte,
- la tige peut coulisser dans le cylindre sans que le premier piston touche le deuxième piston lors du fonctionnement en amortisseur (premier mode opératoire) ;
- le deuxième piston est amené en contact avec le premier piston, sous l'action du fluide de la source d'alimentation afin de déplacer la tige par rapport au cylindre (raccourcissement de l'amortisseur, deuxième mode opératoire).

Dans cet amortisseur connu, il n'est cependant pas prévu que la tige s'étende entièrement à travers la deuxième chambre délimitée par le deuxième piston dans le cylindre. En effet, durant le premier mode opératoire (amortissement) la tige ne s'étend que partiellement dans ladite deuxième chambre. C'est pour cela qu'il a dû être prévu un réservoir dans lequel est refoulé ou duquel est aspiré le volume d'huile correspondant au volume de la tige entrant dans le cylindre ou sortant dudit cylindre durant le déplacement de la tige dans la deuxième chambre. Ce réservoir additionnel rend le dispositif plus complexe et plus onéreux.

Le document **JP 58-112 815** concerne un dispositif pour bloquer le fonctionnement du ressort de suspension de l'essieu d'une grue.

Le corps d'une grue roule sur un sol au moyen de roues supportées par un essieu. Cet essieu est lui-même suspendu à des ressorts à lames liés au corps. L'essieu est par ailleurs lié au corps à l'aide d'un dispositif hydraulique qui comporte une tige guidée dans un cylindre. La tige est articulée sur le corps, tandis que le cylindre est articulé sur l'essieu. Le cylindre présente un épaulement intérieur. La tige, quant à elle, présente un collet dont le diamètre extérieur est quelque peu inférieur au diamètre intérieur de l'épaulement du cylindre et dont la largeur correspond approximativement à la largeur dudit épaulement. Le dispositif hydraulique comporte également deux pistons montés chacun coulissant sur la tige et dans le cylindre du côté respectif du collet et de l'épaulement. Un circuit hydraulique enfin alimente ledit dispositif hydraulique à partir d'une source hydraulique.

Dans un premier mode opératoire, les pistons sont plaqués hydrauliquement contre les couvercles respectifs du cylindre. La tige peut ainsi se déplacer dans le cylindre et la suspension est active.

Dans un deuxième mode opératoire, de l'huile est injectée entre chaque piston et le couvercle correspondant du cylindre. Les deux pistons sont ainsi plaqués contre l'épaulement intérieur du cylindre et maintiennent le collet de la tige dans la partie médiane du cylindre. La tige ne peut plus de déplacer dans le cylindre et la suspension est bloquée. Dans ce dispositif connu, les ressorts de suspension ne sont pas implantés au moins sensiblement coaxialement au dispositif hydraulique. De surcroît, ce dispositif hydraulique comporte deux pistons coulissants destinés à bloquer la tige dans une position médiane. Lors de ce blocage, le corps de la grue est quelque peu rapproché du sol.

Selon une caractéristique supplémentaire de l'invention, il pourra être prévu que la tige du vérin de levage traverse le piston et débouche de part et d'autre du cylindre.

Selon une autre caractéristique supplémentaire de l'invention, le piston pourra avantageusement présenter une cavité destinée à épouser la forme de la butée de la tige. On obtiendra ainsi un contact progressif entre le piston et ladite butée, étant donné que, lors du rapprochement du piston de ladite butée, le fluide présent entre ces deux éléments s'écoulera progressivement.

D'une manière similaire, il pourra être avantageusement prévu que l'extrémité longitudinale du cylindre contre laquelle doit s'appuyer la butée en fin de cours de levage, présente une cavité destinée à épouser la forme de ladite butée. On obtiendra ainsi également un contact progressif entre ladite butée et ledit cylindre.

Le passage de la position de travail à la position de transport s'effectuera ainsi sans chocs.

Selon une autre caractéristique supplémentaire de l'invention, il pourra également être prévu que le vérin de levage soit un vérin à double effet dont les deux chambres sont destinées à être alimentées en fluide à partir de ladite source d'alimentation. Le piston peut ainsi être ramené rapidement dans sa position initiale lors du passage de la position de transport à la position de travail, en alimentant la deuxième chambre en fluide.

Selon une autre caractéristique supplémentaire de l'invention, il pourra être prévu que la butée soit un collet dont la forme et la dimension permettent au fluide contenu dans la deuxième chambre de freiner le coulissement de la tige dans le cylindre. Ceci permet, lors du travail, d'amortir les déplacements en hauteur du mécanisme de récolte.

Selon une autre caractéristique supplémentaire de l'invention, il pourra être prévu que l'élément élastiquement déformable soit un ressort de compression.

Une réalisation particulièrement intéressante est obtenue lorsque ce ressort de compression est un ressort à gaz. Celui-ci pourra comporter une enveloppe élastiquement déformable et deux flasques implantés chacun à une extrémité longitudinale de celle-ci. Pour limiter la déformation latérale de cette enveloppe déformable et la contraindre à se déformer essentiellement longitudinalement, le ressort à gaz pourra comporter en sus un organe de rigidification latérale qui entoure ladite enveloppe élastiquement déformable.

Le ressort à gaz pourra aussi avantageusement comporter une valve au travers de laquelle il pourra être gonflé à la pression voulue. De préférence, ce ressort à gaz sera un ressort à air.

Selon une autre caractéristique supplémentaire de l'invention, il pourra être prévu que l'élément élastiquement déformable soit implanté entre la tige et le cylindre du vérin de levage.

Dans les réalisations où l'élément élastiquement déformable est un ressort à gaz comportant une enveloppe élastiquement déformable et deux flasques, l'un de ces flasques sera lié à la tige et l'autre flasque sera lié au cylindre.

Dans ce cas, pour éviter que du fluide de la source d'alimentation ne risque de fuir dans le ressort à gaz, il pourra être prévu que le dispositif de délestage et de levage comporte un dispositif de sécurité.

Le dispositif de délestage et de levage pourra, à cet effet, comporter une bague de guidage de la tige implantée entre le fluide de la source d'alimentation et le gaz du ressort à gaz. Cette bague de guidage pourra comporter, au niveau de la tige, deux joints d'étanchéité successifs entre lesquels sera prévu un orifice permettant au fluide de la source d'alimentation de s'échapper en cas de fuite au travers du joint d'étanchéité correspondant. Cet orifice pourra avantageusement communiquer avec la pression atmosphérique. Ledit dispositif de sécurité pourra, de plus, comporter un organe de sécurité fixé de manière étanche, à l'une de ses extrémités, à la bague de guidage et s'étendant entre le ressort à gaz et le vérin de levage, de sorte à évacuer en toute sécurité le fluide lors d'une éventuelle fuite.

Il pourra encore être prévu que l'alimentation de la deuxième chambre du vérin de levage située au niveau du ressort à gaz, s'effectue au moyen d'un conduit réalisé à l'intérieur de la tige et débouchant au niveau de la butée. Ce conduit pourra avantageusement débuter au niveau du flasque auquel est fixée la tige.

Selon une autre caractéristique supplémentaire de l'invention, il pourra être prévu que l'élément élastiquement déformable et le vérin de levage forment un seul organe ne présentant que deux points de montage. Dans une telle réalisation, l'élément élastiquement déformable sera tout simplement guidé sur le vérin de levage. Dans ce cas, il pourra être prévu que l'un au moins de ces deux points de montage comporte une liaison élastique. Ceci absorbera les éventuelles vibrations et assurera un fonctionnement plus silencieux de la machine agricole. Préférentiellement, ce seront les deux points de montage qui comporteront chacun une liaison élastique.

Selon une autre caractéristique supplémentaire de l'invention, il pourra être prévu que la machine agricole soit destinée à être liée à un véhicule moteur et que celui-ci comporte ladite source d'alimentation en fluide. Cette dernière alimentera alors le(s) vérin(s) de levage en fluide.

Dans une réalisation particulièrement intéressante d'une telle machine agricole, il pourra être prévu que le mécanisme de coupe s'étende, au travail, transversalement à la direction de travail et que ladite machine comporte :
- une structure d'attelage destinée à être liée à l'attelage du véhicule moteur,
- un premier dispositif de liaison liant le mécanisme de coupe à la structure d'attelage, ce premier dispositif de liaison étant lié au mécanisme de coupe au moins sensiblement dans le voisinage d'une première extrémité longitudinale dudit mécanisme de coupe et autorisant, durant le travail, le pivotement dudit mécanisme de coupe par rapport à la structure d'attelage autour d'un axe géométrique dirigé vers l'avant, ainsi qu'un déplacement en hauteur du mécanisme de coupe par rapport à la structure d'attelage,
- une roue agencée dans le voisinage de la deuxième extrémité longitudinale dudit mécanisme de coupe et roulant sur le sol, ladite roue étant susceptible, durant le travail, de pivoter autour d'un axe géométrique dirigé vers le haut,
- un deuxième dispositif de liaison liant ladite roue au mécanisme de coupe, ce deuxième dispositif de liaison étant lié au mécanisme de coupe au moins sensiblement dans le voisinage de la deuxième extrémité longitudinale dudit mécanisme de coupe et autorisant un déplacement en hauteur dudit mécanisme de coupe par rapport à ladite roue,
   et
- deux dispositifs de délestage et de levage chacun associé à un dispositif de liaison, de sorte que, durant le travail, le mécanisme de coupe soit délesté et que, durant le transport, le mécanisme de coupe s'étende au moins sensiblement parallèlement au-dessus du sol.

Une utilisation particulièrement intéressante de l'invention se situe dans le domaine des faucheuses avec ou sans organes de traitement du produit coupé.

D'autres caractéristiques et avantages de l'invention apparaissent dans la description suivante de deux exemples non limitatifs de réalisation de l'invention, faite en référence au dessin annexé sur lequel :
- la figure 1 représente une vue de dessus d'une machine agricole selon l'invention liée à un tracteur agricole et placée dans la position de travail ;
- la figure 2 représente, dans la position de travail de la figure 1, une coupe de l'organe de manoeuvre montrant la crémaillère qui engrène avec le secteur dent ;
- la figure 3 représente, dans la position de transport, une coupe partielle de la structure d'attelage et d'une partie du premier dispositif de liaison ;
- la figure 4 représente une vue de dessus de la machine agricole placée dans la position de transport ;
- la figure 5 représente une vue latérale arrière de la machine agricole sans organes de protection, suivant la flèche V définie sur la figure 1 ;
- la figure 6 représente une vue latérale de la machine agricole sans organes de protection, suivant la flèche VI définie sur la figure 1 ;
- la figure 7 représente, en coupe, un organe de délestage et de levage dans sa position de travail ;
- la figure 8 représente, en coupe, l'organe de délestage et de levage de la figure 7 dans sa position de transport ;
   et
- la figure 9 représente, en coupe, un autre exemple de réalisation d'un organe de délestage et de levage.

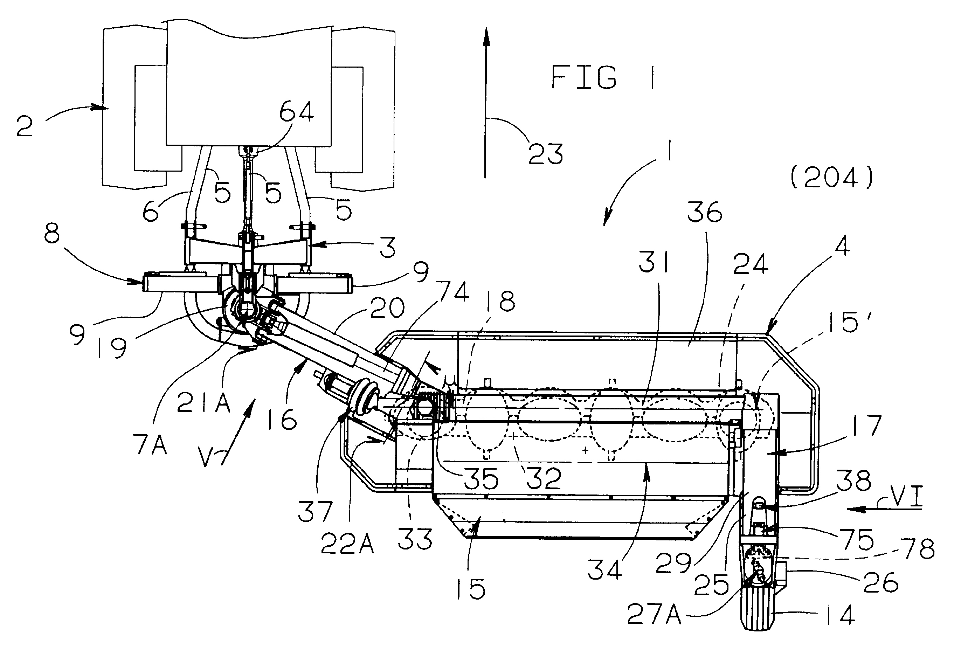

Les figures 1 à 9 représentent une faucheuse (1) selon l'invention. Celle-ci est attelée à un tracteur agricole (2).

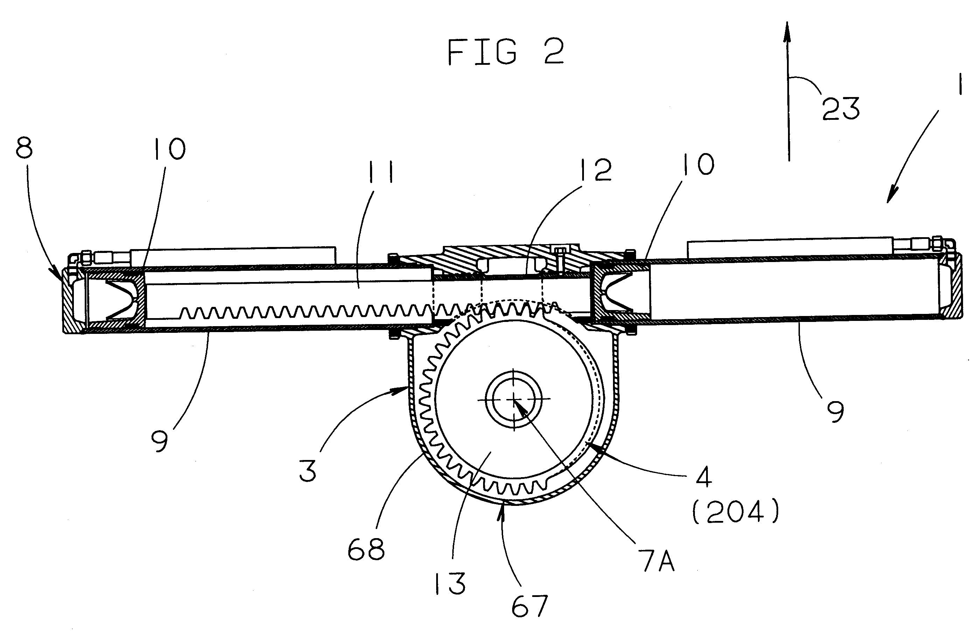

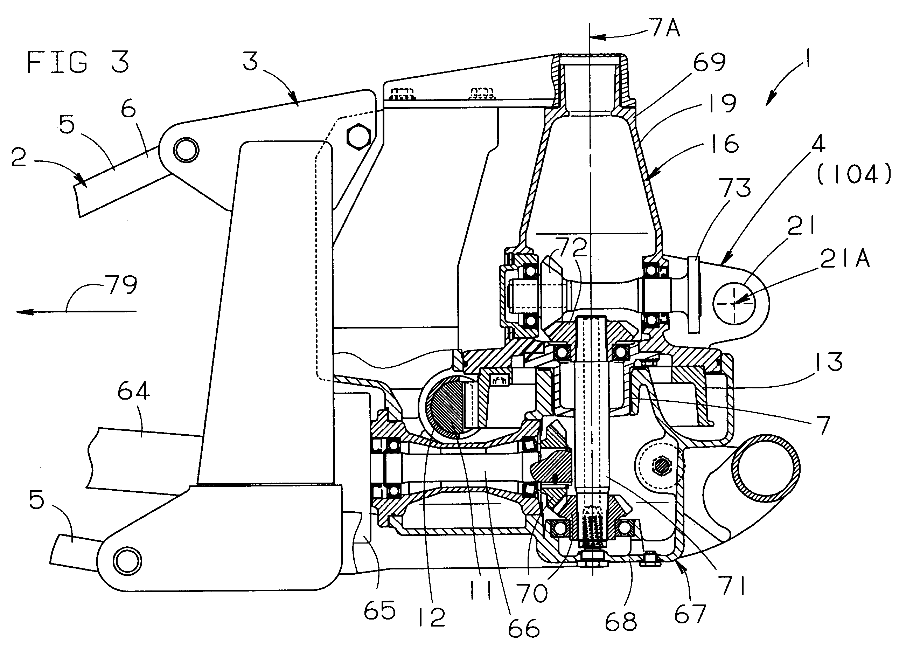

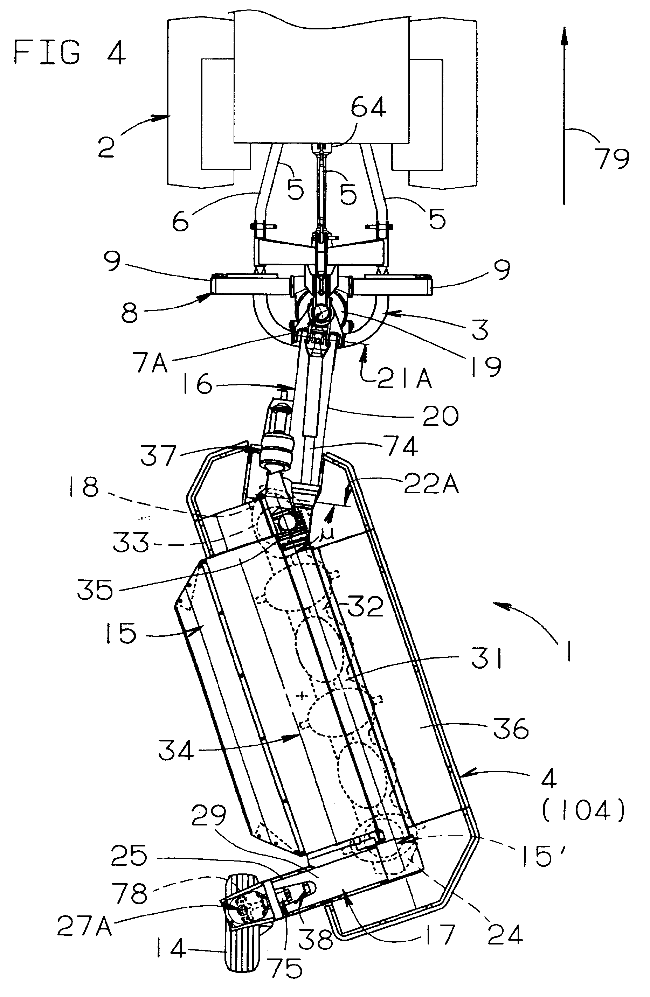

La faucheuse (1) se compose principalement d'une structure d'attelage (3) et d'un corps (4). La structure d'attelage (3) est destinée à être liée, à sa partie frontale, aux trois points (5) du dispositif de relevage (6) du tracteur (2). Le corps (4) est lié à la structure d'attelage (3) au moyen d'une articulation cylindrique (7) (figure 3) d'axe géométrique (7A) au moins sensiblement vertical. La position angulaire du corps (4) par rapport à la structure d'attelage (3) peut être modifiée en faisant pivoter le corps (4) autour dudit axe géométrique (7A). La mise dans la position angulaire souhaitée est réalisée sous l'action d'un verin de manoeuvre (8) comprenant deux cylindres (9) fixés à la structure d'attelage (3). Les deux cylindres (9) sont au moins sensiblement identiques et s'étendent horizontalement dans le prolongement l'un de l'autre. A l'intérieur de chaque cylindre (9) du vérin de manoeuvre (8) est prévu un piston (10) (figure 2) monté de manière coulissante dans ledit cylindre (9). Entre les deux pistons (10) est implantée une crémaillère (11) guidée au moyen d'une pièce de guidage (12) placée au dos de ladite crémaillère (11). De cette sorte, la crémaillère (11) peut uniquement être translatée dans les cylindres (9) sous l'action de l'huile qui alimente soit l'une soit l'autre des extrémités longitudinales du vérin de manoeuvre (8), afin d'engrener avec un secteur denté (13) qui est centré sur l'axe géométrique (7A) et solidaire du corps (4) de la faucheuse (1) (figure 3). Grâce à cet agencement, le corps (4) peut être pivoté autour dudit axe géométrique (7A) sous l'action du vérin de manoeuvre (8) pour être amené de sa position de transport (104) où il s'étend au moins sensiblement dans la voie du tracteur (2) (figures 3 et 4), dans une position de travail (204) où il s'étend au moins sensiblement à côté de la voie du tracteur (2) (figures 1 et 2). Lorsque le corps (4) est dans sa position de travail (204), on empêche l'huile de s'écouler du vérin de manoeuvre (8) ce qui a pour effet de condamner le pivotement dudit corps (4) autour de l'axe géométrique (7A). A l'inverse, pour le transport, on met en communication les deux chambres extérieures du vérin de manoeuvre (8) afin d'autoriser un libre pivotement du corps (4) autour de l'axe géométrique (7A). De ce fait, les manoeuvres de la faucheuse (1) durant le transport sont considérablement simplifiées.

Le corps (4) de la faucheuse (1) s'appuie sur le sol au moyen d'une seule roue (14) implantée à l'extrémité longitudinale du corps (4) éloignée de la structure d'attelage (3). Le corps (4) comporte principalement un mécanisme de récolte (15) et deux dispositifs de liaison (16, 17).

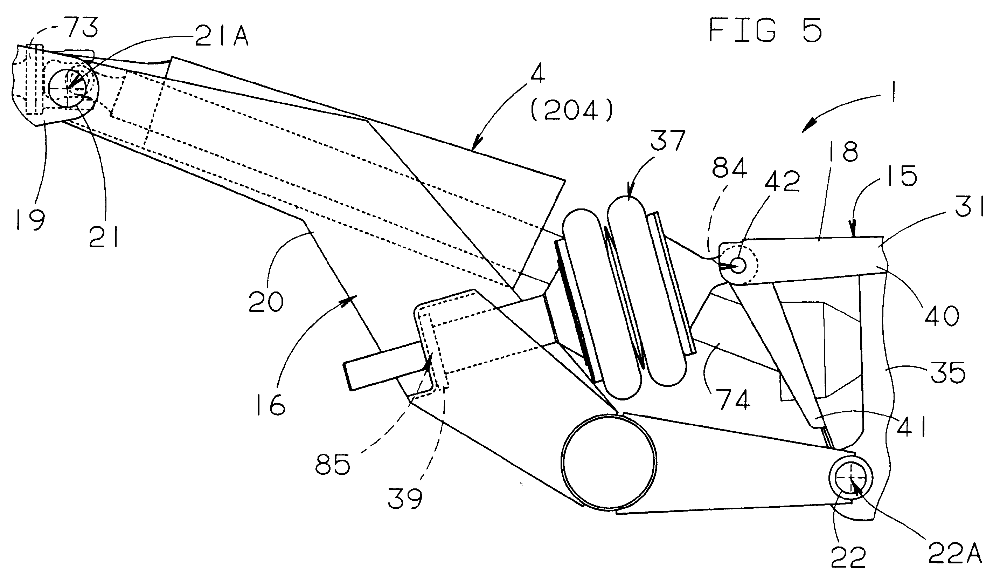

Le premier dispositif de liaison (16) qui est représenté en détail sur les figures 3 et 5, lie la première extrémité longitudinale (18) du mécanisme de récolte (15) à la structure d'attelage (3). A cet effet, le premier dispositif de liaison (16) se compose d'une tête d'attelage (19) montée pivotante autour de l'axe géométrique (7A) de la structure d'attelage (3), et d'un bras oscillant (20) liant le mécanisme de récolte (15) à ladite tête d'attelage (19). Grâce à ce bras oscillant (20), la première extrémité longitudinale (18) du mécanisme de récolte (15) peut se déplacer en hauteur de manière importante par rapport à la structure d'attelage (3) afin de s'adapter au relief du terrain. Ce bras oscillant (20) est plus précisément lié, à l'une de ses extrémités, à la tête d'attelage (19) au moyen d'une première liaison pivot (21). L'axe géométrique (21A) de cette première liaison pivot (21) s'étend au moins sensiblement orthogonalement à l'axe longitudinal du bras oscillant (20) et à l'axe géométrique (7A). A son autre extrémité, le bras oscillant (20) est lié au mécanisme de récolte (15) au moyen d'une deuxième liaison pivot (22) d'axe géométrique (22A) au moins sensiblement parallèle à l'axe géométrique (21A) de la première liaison pivot (21). Du reste, l'axe géométrique (22A) de la deuxième liaison pivot (22) s'étend, en vue suivant la direction de travail (23), au moins sensiblement à mi-hauteur du mécanisme de récolte (15) et forme, en vue de dessus, un angle (µ) d'environ 60° avec l'axe longitudinal (15') dudit mécanisme de récolte (15).

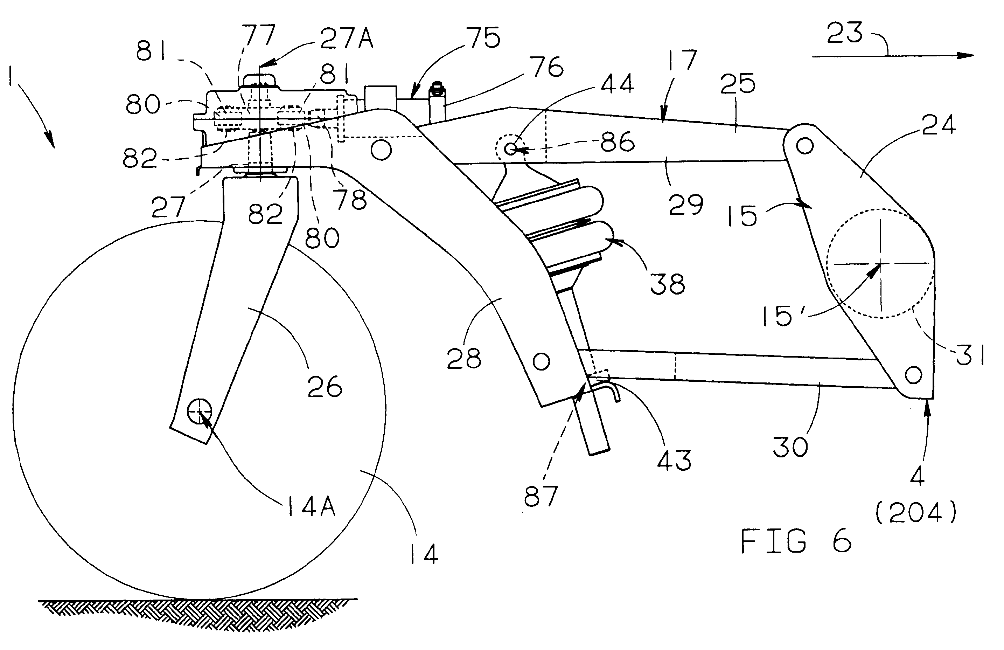

Le deuxième dispositif de liaison (17) (figure 6) lie la deuxième extrémité longitudinale (24) du mécanisme de récolte (15) à la roue (14). Ce deuxième dispositif de liaison (17) se compose d'un quadrilatère déformable (25) et d'un organe de guidage (26) de la roue (14). Le quadrilatère déformable (25) s'étend, en vue de dessus, au moins sensiblement orthogonalement à l'axe longitudinal (15') du mécanisme de récolte (15) et l'organe de guidage (26) de la roue (14) est lié au quadrilatère déformable (25) au moyen d'une articulation cylindrique (27) d'axe géométrique (27A) au moins sensiblement vertical. Grâce à cet agencement, la deuxième extrémité longitudinale (24) du mécanisme de récolte (15) peut aisément se déplacer en hauteur par rapport à la roue (14) afin de s'adapter au relief du terrain tout en autorisant le pivotement de l'organe de guidage (26) de la roue (14). Le quadrilatère déformable (25) comporte une console (28) à la partie supérieure de laquelle est articulé l'organe de guidage (26) de la roue (14) et qui est lié au mécanisme de récolte (15) au moyen de deux bielles (29, 30). Ce quadrilatère déformable (25) a au moins sensiblement la forme d'un parallélogramme dont le côté matérialisé par la console (28) s'étend vers le haut et vers l'arrière par rapport à la direction de travail (23) de sorte à ménager un espace pour la roue (14). Avantageusement, le prolongement de l'axe géométrique (27A) passe à proximité de l'axe de roulement (14A) de la roue (14).

Entre les deux dispositifs de liaison (16, 17) s'étend le mécanisme de récolte (15). Ce mécanisme de récolte (15) comporte une structure porteuse (31) à laquelle sont liés les deux dispositifs de liaison (16, 17). Cette structure porteuse (31) supporte une barre de coupe (32) équipée d'organes de coupe (33), et un rotor de traitement (34) - dont seul l'axe de rotation est représenté sur les figures 1 et 4 - destiné à traiter le produit coupé par lesdits organes de coupe (33). La structure porteuse (31) s'étend au moins sensiblement perpendiculairement à la direction de travail (23) et comporte un carter d'entrée (35) servant à l'entraînement des organes de coupe (33) et du rotor de traitement (34). Le carter d'entrée (35) est implanté dans le voisinage de la deuxième liaison pivot (22) liant le premier dispositif de liaison (16) au mécanisme de récolte (15). Du reste, le mécanisme de récolte (15) comporte aussi des organes de protection (36) qui s'étendent autour de la barre de coupe (32) et du rotor de traitement (34).

Le délestage et le levage du mécanisme de récolte (15) est réalisé au moyen de deux organes de délestage et de levage (37, 38) chacun associé au dispositif de liaison (16, 17) correspondant. Le premier organe de délestage et de levage (37) est implanté entre le bras oscillant (20) du premier dispositif de liaison (16) et la structure porteuse (31) du mécanisme de récolte (15). Comme visible sur la figure 5, le premier organe de délestage et de levage (37) est lié d'une part au moins sensiblement au milieu du bras oscillant (20) à l'aide d'une articulation élastique (39) et d'autre part au carter d'entrée (35) de la structure porteuse (31) au moyen de deux bras (40, 41). Ces deux bras (40, 41) forment avec le carter d'entrée (35) une triangulation très rigide à laquelle est lié le premier dispositif de délestage et de levage (37) à l'aide d'une bague élastique (42) du type "silentbloc". Grâce à l'articulation élastique (39) et à la bague élastique (42), l'organe de délestage et de levage (37) est d'un montage aisé et d'un fonctionnement silencieux. De surcroît, les vibrations sont amorties.

Le deuxième organe de délestage et de levage (38) (figure 6) s'étend entre la partie inférieure de la console (28) et la bielle supérieure (29) du quadrilatère déformable (25). Là aussi, l'organe de délestage et de levage (38) est lié au quadrilatère déformable (25) au moyen d'une articulation élastique (43) et d'une bague élastique (44). Compte tenu de leur agencement, les deux organes de délestage et de levage (37, 38) assurent, lors du travail, le délestage des extrémités longitudinales (18, 24) du mécanisme de récolte (15).

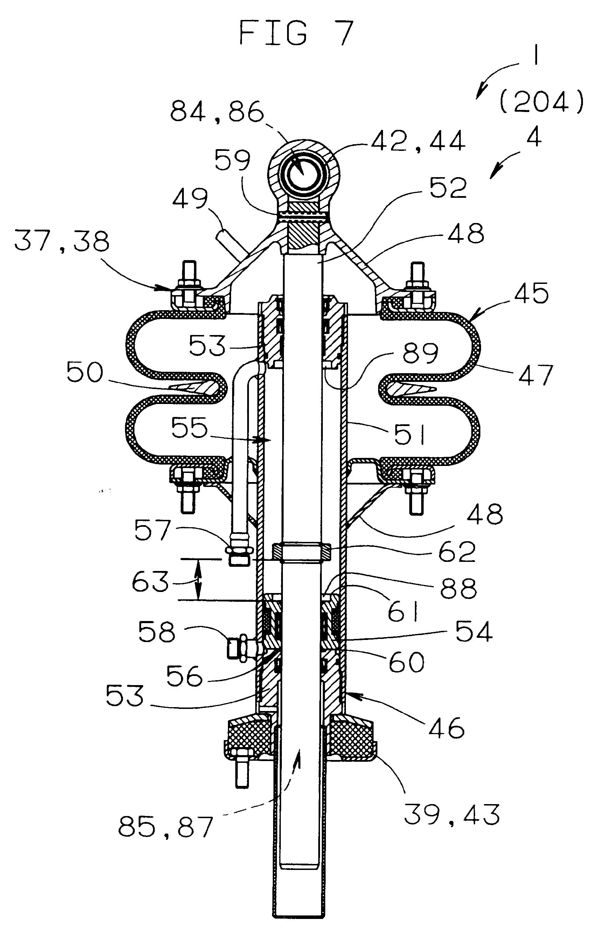

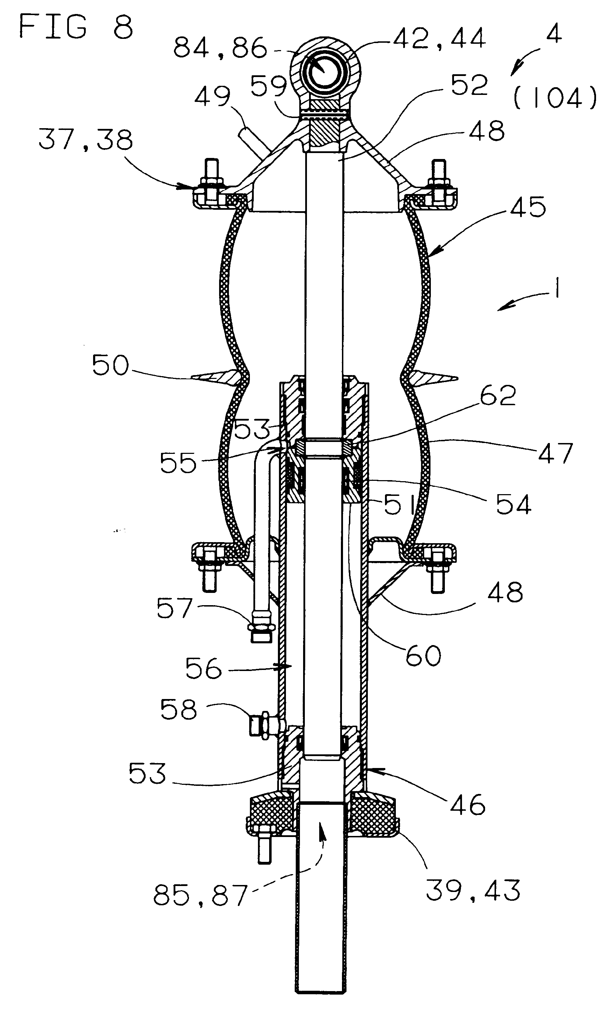

Sur les figures 7 et 8 apparaît, en détail, un tel organe de délestage et de levage (37, 38). Celui-ci comporte un ressort à gaz (45) servant à délester le mécanisme de récolte (15) et monté en parallèle avec un vérin de levage (46) permettant de lever ledit mécanisme de récolte (15) lorsque l'utilisateur le souhaite. Le ressort a gaz (45) comporte une enveloppe déformable (47) sous pression et deux flasques (48) liés chacun à une extrémité longitudinale correspondante de ladite enveloppe déformable (47). Le ressort à gaz (45) contient un gaz qui peut être amené à la pression désirée au travers d'une valve (49) implantée sur l'un des flasques (48). En gonflant plus ou moins l'enveloppe déformable (47) au travers de la valve (49), l'utilisateur a la possibilité d'adapter la rigidité du ressort à gaz (45) aux conditions de travail rencontrées.

Avantageusement, le ressort à gaz (45) contient de l'air ce qui permet à l'utilisateur de gonfler aisément l'enveloppe déformable (47) au moyen d'une simple pompe à air. En outre, pour limiter la déformation latérale de l'enveloppe déformable (47) et la contraindre à une déformation longitudinale plus importante, l'enveloppe déformable (47) est entourée d'un organe de rigidification latérale (50).

Le vérin de levage (46), quant à lui, comporte notamment un cylindre (51) et une tige (52). La tige (52) est fixée au flasque supérieur (48) du ressort à gaz (45) au moyen d'une goupille (59), alors que le cylindre (51) est lié rigidement au flasque inférieur (48) dudit ressort à gaz (45). A chacune de ses extrémités, le cylindre (51) est muni d'une bague de guidage étanche (53) permettant à la tige (52) de déboucher de part et d'autre du cylindre (51). Au travail, lorsque le ressort à gaz (45) s'allonge et se raccourcit sous l'action du déplacement en hauteur du mécanisme de récolte (15), les deux flasques (48) du ressort à gaz (45) s'éloignent et se rapprochent l'un de l'autre étant donné que la tige (52) coulisse dans le cylindre (51). Comme aucun élément ne gêne le déplacement de la tige (52) dans le cylindre (51), le mécanisme de récolte (15) est donc parfaitement délesté au travail.

Pour lever le mécanisme de récolte (15) grâce au vérin de levage (46), il est prévu un piston (54) servant à allonger ledit vérin de levage (46). Le piston (54) est monté coulissant sur la tige (52) et sépare le cylindre (51) en deux chambres distinctes (55, 56) chacune alimentée au travers d'une conduite (57, 58) respective. Au travail, la première chambre (56) du cylindre (51) est vide et la face inférieure (60) du piston (54) s'appuie, sous l'action du fluide contenu dans la deuxième chambre (55), contre la bague de guidage inférieure (53). Par ailleurs, la face supérieure (61) du piston (54) est destinée à venir s'appuyer contre un collet (62) implanté un peu plus haut sur la tige (52) du vérin de levage (46). Etant donné qu'au travail il subsiste un jeu fonctionnel (63) entre la face supérieure (61) du piston (54) et le collet (62) de la tige (52), le piston (54) ne gêne pas le fonctionnement du ressort à gaz (45). Mais, lorsque l'utilisateur désire lever le mécanisme de récolte (15), il alimente la première chambre (56) du cylindre (51) ce qui a pour effet de translater le piston (54) vers le haut. Dès l'instant où le piston (54) arrive en contact avec le collet (62), la tige (52) se déplace vers le haut et le vérin de levage (46) et le ressort à gaz (45) s'allongent. Le piston (54) et la tige (52) se translatent jusqu'à ce que le piston (54) arrive en bout de course. Dans sa position levée, le mécanisme de récolte (15) s'étend au moins sensiblement parallèlement au-dessus du sol et l'action des ressorts à gaz (45) est annulée (figure 8). D'autres particularités et avantages des organes de délestage et de levage (37, 38) seront encore décrites ultérieurement.

L'entraînement du mécanisme de récolte (15) est réalisé à partir de la prise de force (non représentée) du tracteur (2), qui entraîne, par l'intermédiaire d'un arbre télescopique à joints universels (64), un limiteur de couple (65) monté sur l'arbre d'entrée (66) d'un dispositif de transmission de mouvement (67) (figure 3). Le dispositif de transmission (67) comporte un carter inférieur (68) solidaire de la structure d'attelage (3) et un carter supérieur (69) solidaire de la tête d'attelage (19). L'arbre d'entrée (66) du carter inférieur (68) du dispositif de transmission de mouvement (67) entraîne, par l'intermédiaire d'un premier couple de roues dentées coniques (70), un arbre intermédiaire (71) dont l'axe de rotation est confondu avec l'axe géométrique (7A) et qui entraîne, par l'intermédiaire d'un deuxième couple de roues dentées coniques (72), l'arbre de sortie (73) du carter supérieur (69). Ce dernier entraîne, par l'intermédiaire d'un autre arbre télescopique à joints universels (74) (figures 1, 4 et 5), l'arbre d'entrée (non représenté) du carter d'entrée (35) du mécanisme de récolte (15). Afin de réduire l'angle de fonctionnement des joints universels de cet arbre télescopique (74), l'arbre de sortie (73) du carter supérieur (69) s'étend, en travail normal, au moins sensiblement au même niveau que l'arbre d'entrée (non représenté) du carter d'entrée (35) du mécanisme de récolte (15).

Le pivotement de l'organe de guidage (26) de la roue (14) peut, en vue du transport, être condamné au moyen d'un dispositif de verrouillage (75) (figure 1, 4 et 6). Le dispositif de verrouillage (75) comporte notamment un vérin de positionnement (76) fixé à la console (28) du quadrilatère déformable (25), et un levier (77) lié rigidement à l'organe de guidage (26) de la roue (14). Au travail, le vérin de positionnement (76) n'agit pas sur ledit levier (77) ce qui permet à la roue (14) de s'orienter automatiquement autour de l'axe géométrique (27A) en fonction de son déplacement. A l'opposé, en vue du transport, le vérin de positionnement (76) agit sur le levier (77) au moyen d'un organe d'orientation (78) de sorte à orienter la roue (14) suivant la direction de transport (79) et à maintenir ladite roue (14) dans sa position de transport (figure 4). A cet effet, le levier (77) présente deux butées (80) s'étendant de part et d'autre de l'axe géométrique (27A) et qui sont réalisées chacune sous forme d'un galet (81). Compte tenu du fait que chaque galet (81) est en sus monté pivotant autour d'un axe (82) dirigé au moins sensiblement verticalement, l'orientation et le verrouillage de la roue (14) s'effectuent aisement.

La faucheuse (1) selon l'invention fonctionne de la manière suivante :

Au transport (figures 3, 4 et 8), le vérin de manoeuvre (8) autorise le pivotement du corps (4) autour de l'axe géométrique (7A), tandis que la roue (14) est orientée dans la direction de transport (79). Les deux vérins de levage (46), quant à eux, maintiennent le mécanisme de récolte (15) au moins sensiblement parallèlement au-dessus du sol. Comme le corps (4) de la faucheuse (1) s'étend au moins sensiblement dans la voie du tracteur (2), les manoeuvres au transport sont facilitées. De surcroit, il ne faut qu'une place réduite pour le remisage.

Pour amener le corps (4) de la faucheuse (1) de sa position de transport (104) dans sa position de travail (204), on autorise le pivotement de la roue (14) autour de l'axe géométrique (27A) au moyen du vérin de positionnement (76) et on pivote le corps (4) dans sa position de travail (204) sous l'action du vérin de manoeuvre (8). Etant donné que le corps (4) s'appuie sur le sol, tant dans sa position de transport (104) que dans sa position de travail (204), au moyen d'au moins une roue (14), le tracteur conserve une bonne stabilité. Par ailleurs, compte tenu du dispositif de transmission de mouvement (67) perfectionné, le mécanisme de récolte (15) est susceptible d'être entrainé dans toutes les positions dans lesquelles il peut être pivoté autour de l'axe géométrique (7A).

Au travail (figures 1, 2, 5, 6 et 7), le vérin de manoeuvre (8) condamne le pivotement du corps (4) autour de l'axe géométrique (7A) tandis que la roue (14) est susceptible de pivoter autour de l'axe géométrique (27A). L'action des vérins de levage (46), quant à elle, est supprimée de sorte à permettre au mécanisme de récolte (15) de s'adapter au relief du sol. En sus, étant donné que chaque extrémité longitudinale (18, 24) est délestée, le mécanisme de récolte (15) passe aisément par dessus les obstacles que peut présenter le relief du sol.

Les organes de délestage et de levage (37, 38) de cette faucheuse (1) selon l'invention présentent aussi les avantages suivants.

Compte tenu du fait que le ressort à gaz (45) est implanté sur le vérin de levage (46) de manière au moins sensiblement coaxiale, les organes de délestage et de levage (37, 38) sont particulièrement compacts et ne comportent que deux points (84, 85, 86, 87) de montage (figures 5 à 8).

Le fait de pouvoir gonfler et dégonfler le ressort à gaz (45) est un avantage supplémentaire de cette faucheuse selon l'invention. Il est, par exemple, possible de monter les ressorts à gaz (45) dégonflés sur la machine si cela en simplifie le montage.

De plus, l'utilisateur commande, depuis le tracteur (2), l'alimentation des vérins de levage (46) en envoyant de l'huile, soit dans la première chambre (56), soit dans la deuxième chambre (55) de chaque vérin de levage (46), au moyen de la centrale hydraulique (non représentée) du tracteur (2).

Afin de lever le mécanisme de récolte (15) au moins sensiblement horizontalement, un diviseur de débit (non représenté) est prévu entre la centrale hydraulique et la première chambre (56) des vérins de levage (46).

Par ailleurs, en fonction de la forme et des dimensions du collet (62) de la tige (52), l'action de l'huile contenue dans la première chambre (55) du vérin de levage (46) peut amortir les déplacements en hauteur du mécanisme de récolte (15) durant le travail. Les organes de délestage et de levage (37, 38) présentent donc en sus une fonction d'amortisseur durant le travail (figures 1, 2, 5, 6 et 7).

En outre, le piston (54) présente une cavité (88) (figure 7) destinée à épouser la forme du collet (62) de la tige (52), de sorte à obtenir un contact progressif entre ledit piston (54) et ledit collet (62).

De même, en fin de course de levage, c'est-à-dire lorsque le mécanisme de récolte (15) est levé au-dessus du sol (figures 3, 4 et 8), le piston (54) amène ledit collet (62) contre la bague de guidage (53) correspondante qui présente une autre cavité (89) (figure 7) destinée à épouser la forme du collet (62), de sorte à obtenir, là-aussi, un contact progressif entre ledit collet (62) et ladite bague de guidage (53).

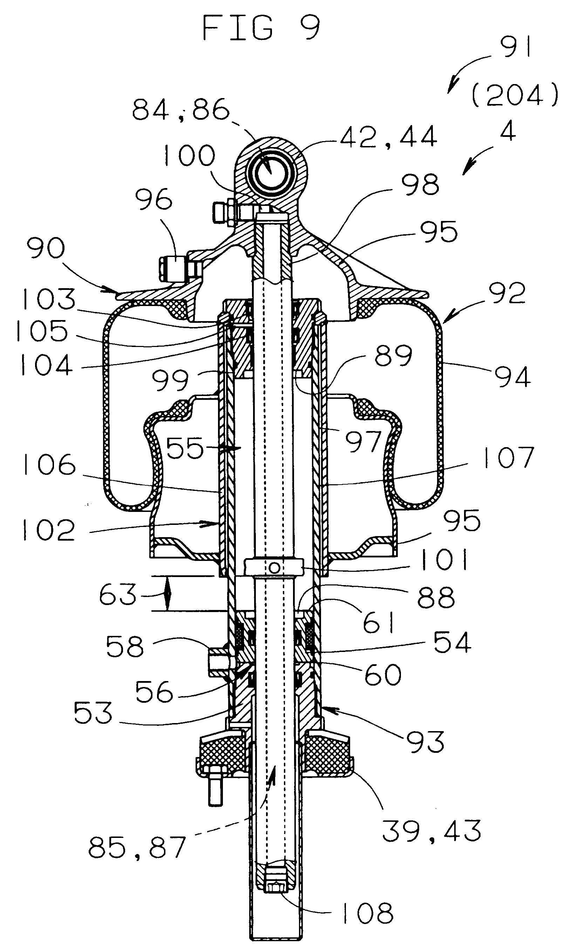

Sur la figure 9 apparaît un autre exemple de réalisation d'un organe de délestage et de levage (90) d'une faucheuse (91) selon l'invention. La faucheuse (91) comporte les mêmes caractéristiques que la faucheuse (1) précédente; seuls les organes de délestage et de levage (37, 38) ont été remplacés chacun par le présent organe de délestage et de levage (90). Sur la figure 9, l'organe de délestage et de levage (90) est représenté en position de travail.

Comme les précédents organes de délestage et de levage (37, 38), le présent organe de délestage et de levage (90) comporte un ressort à gaz (92) servant à délester le mécanisme de récolte (15) et monté en parallèle avec un vérin de levage (93) permettant de lever ledit mécanisme de récolte (15) lorsque l'utilisateur le souhaite. Le ressort à gaz (92) comporte une enveloppe déformable (94) sous pression et deux flasques (95) liés chacun à une extrémité longitudinale correspondante de ladite enveloppe déformable (94). Le ressort à gaz (92) contient un gaz qui peut être amené à la pression désirée au travers d'une valve (96) implantée sur l'un des flasques (95). En gonflant plus ou moins l'enveloppe déformable (94) au travers de la valve (96), l'utilisateur a la possibilité d'adapter la rigidité du ressort à gaz (92) aux conditions de travail rencontrées. De plus, le ressort à gaz (92) contient de l'air, ce qui permet à l'utilisateur de gonfler aisément l'enveloppe déformable (94) au moyen d'une simple pompe à air.

Le vérin de levage (93), quant à lui, comporte notamment un cylindre (97) et une tige (98). La tige (98) est fixée au flasque supérieur (95) du ressort à gaz (92), alors que le cylindre (97) est lié rigidement au flasque inférieur (95) dudit ressort à gaz (92). A chacune de ses extrémités, le cylindre (97) est muni d'une bague de guidage étanche (53, 99) permettant à la tige (98) de déboucher de part et d'autre du cylindre (97). Au travail, lorsque le ressort à gaz (92) s'allonge et se raccourcit sous l'action du déplacement en hauteur du mécanisme de récolte (15), les deux flasques (95) du ressort à gaz (92) s'éloignent et se rapprochent l'un de l'autre étant donné que la tige (98) coulisse dans le cylindre (97). Comme aucun élément ne gêne le déplacement de la tige (98) dans le cylindre (97), le mécanisme de récolte (15) est donc parfaitement délesté au travail.

Comme précédemment, il est également prévu un piston (54) servant à allonger ledit vérin de levage (93). Le piston (54) est monté coulissant sur la tige (98) et sépare le cylindre (97) en deux chambres distinctes (55, 56) chacune alimentée au travers d'une conduite (100, 58) respective. Au travail, la première chambre (56) du cylindre (97) est vide et la face inférieure (60) du piston (54) s'appuie, sous l'action du fluide contenu dans la deuxième chambre (55), contre la bague de guidage inférieure (53). Par ailleurs, la face supérieure (61) du piston (54) est destinée à venir s'appuyer contre un collet (101) implanté un peu plus haut sur la tige (98) du vérin de levage (93). Etant donné qu'au travail, il subsiste un jeu fonctionnel (63) entre la face supérieure (61) du piston (54) et le collet (101) de la tige (98), le piston (54) ne gêne pas le fonctionnement du ressort à gaz (92). Mais, lorsque l'utilisateur désire lever le mécanisme de récolte (15), il alimente la première chambre (56) du cylindre (97) ce qui a pour effet de translater le piston (54) vers le haut. Dès l'instant où le piston (54) arrive en contact avec le collet (101), la tige (98) se déplace vers le haut et le vérin de levage (93) et le ressort à gaz (92) s'allongent. Le piston (54) et la tige (98) se translatent jusqu'à ce que le piston (54) arrive en bout de course. Dans sa position levée, le mécanisme de récolte (15) s'étend au moins sensiblement parallèlement au-dessus du sol et l'action des ressorts à gaz (92) est annulée. En ce qui concerne les particularités et avantages des organes de délestage et de levage (37, 38) décrits précédemment, ils sont également valables pour le présent organe de délestage et de levage (90) et ne seront, de ce fait, pas redécrits. Il en est de même pour l'implantation de l'organe de délestage et de levage (90) sur la faucheuse (91).

Par rapport aux organes de délestage et de levage (37, 38) précédemment décrits, le présent organe de délestage et de levage (90) comporte en sus un dispositif de sécurité (102) évitant que de l'huile ne risque de fuir dans le ressort à gaz (92). Compte tenu de la pression élevée régnant habituellement dans ce type de circuit hydraulique, une fuite importante d'huile dans le ressort à gaz (92) risquerait de faire exploser ce dernier.

Pour éviter ce risque, la bague de guidage (99) implantée entre le gaz et l'huile, présente certaines particularités. En effet, au niveau du guidage de la tige (98), la bague de guidage (99) comporte deux joints d'étanchéité (103, 104) successifs entre lesquels est prévu au moins un orifice (105) communiquant avec la pression atmosphérique. De ce fait, si le joint (104) devait fuir, l'huile s'échapperait vers l'extérieur. Le dispositif de sécurité (102) comporte à cet effet un organe de sécurité (106) fixé de manière étanche, à son extrémité supérieure, à ladite bague de guidage (99) et s'étendant vers le bas entre le ressort à gaz (92) et le vérin de relevage (93). Etant donné qu'entre l'organe de sécurité (106) et le cylindre (97) du vérin de relevage (93) subsiste une cavité (107) entourant ledit cylindre (97), le fluide s'échappant par l'orifice (105), peut ensuite s'écouler en toute sécurité vers le bas. A son extrémité inférieure, l'organe de sécurité (106) est encore lié partiellement au cylindre (97).

Un avantage supplémentaire de ce dispositif de délestage et de relevage (90) réside dans l'implantation de la conduite (100) servant à alimenter la deuxième chambre (55) dans laquelle s'étend le collet (101). En effet, pour éviter de passer cette conduite (100) au travers du flasque inférieur (95), cette conduite (100) débute au niveau du flasque supérieur (95), là où la tige (98) est fixée de manière étanche audit flasque (95), et se poursuit à l'intérieur de la tige (98) pour déboucher au moins sensiblement radialement au niveau du collet (101). Pour des facilités de fabrication, la tige (98) est réalisée à partir d'un tube dont une extrémité est bouchée de manière étanche par une vis (108).

Finalement, différentes modifications restent possibles, notamment en ce qui concerne la constitution des divers éléments ou par substitution d'équivalents techniques, sans pour autant sortir du domaine de protection défini par les revendications. Ledit vérin pourrait être monté en parallèle avec un ressort cylindrique.

## Revendications

1. Machine agricole comportant un mécanisme de récolte (15) et au moins un dispositif de délestage et de levage (37, 38 ; 90) destiné, durant le travail, à délester ledit mécanisme de récolte (15) et, en vue du transport, à lever ledit mécanisme de récolte (15), ledit (chaque) dispositif de délestage et de levage (37, 38 ; 90) comportant un vérin de levage (46 ; 93) monté en parallèle avec un élément élastiquement déformable (45 ; 92) implanté au moins sensiblement coaxialement sur ledit vérin de levage (46 ; 93), ce dernier comprenant :
- un cylindre (51 ; 97),
- une tige (52 ; 98) guidée dans ledit cylindre (51 ; 97) et débouchant dudit cylindre (51 ; 97), et
- un piston (54) monté coulissant dans le cylindre (51 ; 97) et séparant le cylindre (51 ; 97) en deux chambres distinctes (55, 56), une première chambre (56) étant destinée à être alimentée en fluide à partir d'une source d'alimentation (2) de sorte à translater le piston (54) dans le cylindre (51 ; 97) pour lever ledit mécanisme de récolte (15),
***caractérisée en ce*** **que** ladite tige (52 ; 98) s'étend, quelle que soit sa position, entièrement au travers de l'espace intérieur du cylindre (51 ; 97), et en ce que ledit piston (54) est désolidarisé de ladite tige (52 ; 98) et est monté coulissant sur celle-ci, ladite tige (52 ; 98) comportant une butée (62 ; 101) contre laquelle le piston (54) est destiné à venir s'appuyer, de telle sorte :
- que, durant le travail, la tige (52 ; 98) puisse coulisser dans le cylindre sans que la butée (62 ; 101) de ladite tige (52 ; 98) touche le piston (54), ce qui autorise un fonctionnement normal de l'élément élastiquement déformable (45 ; 92) pour délester le mécanisme de récolte (15)
et
- qu'en vue du transport, le piston (54) soit amené en contact avec la butée (62 ; 101) de la tige (52 ; 98) sous l'action du fluide de la source d'alimentation (2), afin de déplacer ladite tige (52 ; 98) par rapport au cylindre (51 ; 97) pour lever ledit mécanisme de récolte (15).

2. Machine agricole selon la revendication 1, ***caractérisée en ce*** que la tige (52 ; 98) traverse le piston (54) et débouche de part et d'autre du cylindre (51 ; 97).

3. Machine agricole selon la revendication 1 ou 2**, *caractérisée en ce*** que le piston (54) présente une cavité (88) destinée à épouser la forme de la butée (62 ; 101) de la tige (52 ; 98), de sorte à obtenir un contact progressif entre ledit piston (54) et ladite butée (62 ; 101).

4. Machine agricole selon l'une quelconque des revendications 1 à 3, ***caractérisée en ce*** que, en fin de course de levage, le piston (54) amène la butée (62 ; 101) de la tige (52 ; 98) contre une extrémité longitudinale (53 ; 99) du cylindre (51 ; 97) qui présente une cavité (89) destinée à épouser la forme de ladite butée (62 ; 101), de sorte à obtenir un contact progressif entre ladite butée (62 ; 101) et ledit cylindre (51 ; 97).

5. Machine agricole selon l'une quelconque des revendications 1 à 4, ***caractérisée en ce*** que le vérin de levage (46 ; 93) est un vérin à double effet dont les deux chambres (55, 56) sont destinées à être alimentées en fluide à partir de ladite source d'alimentation (2).

6. Machine agricole selon l'une quelconque des revendications 1 à 5, ***caractérisée en ce*** que la butée (62 ; 101) est un collet dont la forme et les dimensions permettent d'amortir, lors du travail, le déplacement en hauteur du mécanisme de récolte (15).

7. Machine agricole selon l'une quelconque des revendications 1 à 6, ***caractérisée en ce*** que l'élément élastiquement déformable (45 ; 92) est un ressort de compression.

8. Machine agricole selon la revendication 7, ***caractérisée en ce*** que le ressort de compression est un ressort à gaz (45 ; 92).

9. Machine agricole selon la revendication 8, ***caractérisée en ce*** que le ressort à gaz (45 ; 92) comporte une enveloppe élastiquement déformable (47 ; 94) et deux flasques (48 ; 95) prévus chacun à une extrémité longitudinale de celle-ci.

10. Machine agricole selon la revendication 9, ***caractérisée en ce*** que le ressort à gaz (45) comporte en sus un organe de rigidification latérale (50) qui entoure l'enveloppe élastiquement déformable (47).

11. Machine agricole selon l'une quelconque des revendications 8 à 10, ***caractérisée en ce*** que le ressort à gaz (45 ; 92) comporte aussi une valve (49 ; 96) au travers de laquelle il peut être gonflé à la pression voulue.

12. Machine agricole selon l'une quelconque des revendications 8 à 11, ***caractérisée en ce*** que le ressort à gaz (45 ; 92) est un ressort à air.

13. Machine agricole selon l'une quelconque des revendications 1 à 12, ***caractérisée en ce*** que l'élément élastiquement déformable (45 ; 92) est implanté entre la tige (52 ; 98) et le cylindre (51 ; 97) du vérin de levage (46 ; 97).

14. Machine agricole selon les revendications 9 et 13, ***caractérisée en ce*** que l'un des flasques (48 ; 95) est lié à la tige (52 ; 98) et l'autre desdits flasques (48 ; 95) est lié au cylindre (51 ; 97).

15. Machine agricole selon la revendication 14, ***caractérisée en ce*** que le dispositif de délestage et de levage (90) comporte un dispositif de sécurité (102) évitant que du fluide de la source d'alimentation (2) ne risque de fuir dans le ressort à gaz (92).

16. Machine agricole selon la revendication 15, *c**aractérisée en ce*** que le dispositif de délestage et de levage (90) comporte une bague de guidage (99) de la tige (98), laquelle bague de guidage (99) est implantée entre le fluide de la source d'alimentation (2) et le gaz du ressort à gaz (92), et que ladite bague de guidage (99) comporte, au niveau de la tige (98), deux joints d'étanchéité successifs (103, 104) entre lesquels est prévu un orifice (105) permettant au fluide de la source d'alimentation (2) de s'échapper en cas de fuite au travers du joint d'étanchéité (104) correspondant.

17. Machine agricole selon la revendication 16, ***caractérisée en ce*** que ledit orifice (105) communique avec la pression atmosphérique.

18. Machine agricole selon la revendication 16 ou 17, ***caractérisée en** ce* que le dispositif de sécurité (102) comporte un organe de sécurité (106) fixé de manière étanche, à l'une de ses extrémités, à la bague de guidage (99) et s'étendant entre le ressort à gaz (92) et le vérin de levage (93), de sorte à évacuer en toute sécurité le fluide lors d'une éventuelle fuite.

19. Machine agricole selon l'une quelconque des revendications 14 à 18, *c**aractérisée en ce*** que l'alimentation de la deuxième chambre (55) du vérin de levage (93) située au niveau du ressort à gaz (92), s'effectue au moyen d'un conduit (100) réalisé à l'intérieur de la tige (98) et débouchant au niveau de la butée (101).

20. Machine agricole selon la revendication 19, ***caractérisée en ce*** que ledit conduit (100) débute au niveau du flasque (95) auquel est fixée la tige (98).

21. Machine agricole selon l'une quelconque des revendications 1 à 20, ***caractérisée en ce*** que l'élément élastiquement déformable (45 ; 92) et le vérin de levage (46 ; 93) forment un seul organe (37, 38 ; 90) ne présentant que deux points de montage (84, 85, 86, 87).

22. Machine agricole selon la revendication 21, ***caractérisée en ce*** que l'un au moins des deux points de montage (84, 85, 86, 87) comporte une liaison élastique (42, 39, 44, 43).

23. Machine agricole selon la revendication 22, ***caractérisée en ce*** que les deux points de montage (84, 85, 86, 87) comportent chacun une liaison élastique (42, 39, 44, 43).

24. Machine agricole selon l'une quelconque des revendications 1 à 23, ***caractérisée en ce*** qu'elle est destinée à être liée à un véhicule moteur (2) et que ledit véhicule moteur (2) comporte ladite source d'alimentation en fluide.

25. Machine agricole selon la revendication 24, ***caractérisée en ce*** que le mécanisme de coupe (15) s'étend, au travail, transversalement à la direction de travail (23) et que ladite machine comporte :
- une structure d'attelage (3) destinée à être liée à l'attelage (6) du véhicule moteur (2),
- un premier dispositif de liaison (16) liant le mécanisme de coupe (15) à la structure d'attelage (3), ce premier dispositif de liaison (16) étant lié au mécanisme de coupe (15) au moins sensiblement dans le voisinage d'une première extrémité longitudinale (18) dudit mécanisme de coupe (15) et autorisant, durant le travail, le pivotement dudit mécanisme de coupe (15) par rapport à la structure d'attelage (3) autour d'un axe géométrique (22A) dirigé vers l'avant, ainsi qu'un déplacement en hauteur du mécanisme de coupe (15) par rapport à la structure d'attelage (3),
- une roue (14) agencée dans le voisinage de la deuxième extrémité longitudinale (24) dudit mécanisme de coupe (15) et roulant sur le sol, ladite roue (14) étant susceptible, durant le travail, de pivoter autour d'un axe géométrique (27A) dirigé vers le haut,
- un deuxième dispositif de liaison (17) liant ladite roue (14) au mécanisme de coupe (15), ce deuxième dispositif de liaison (17) étant lié au mécanisme de coupe (15) au moins sensiblement dans le voisinage de la deuxième extrémité longitudinale (24) dudit mécanisme de coupe (15) et autorisant un déplacement en hauteur dudit mécanisme de coupe (15) par rapport à ladite roue (14),
et
- deux dispositifs de délestage et de levage (37, 38 ; 90) chacun associé à un dispositif de liaison (16, 17), de sorte que, durant le travail, le mécanisme de coupe (15) soit délesté et que, durant le transport, le mécanisme de coupe (15) s'étende au moins sensiblement parallèlement au-dessus du sol.

26. Machine agricole selon l'une quelconque des revendications 1 à 25, ***caractérisée en ce*** que c'est une faucheuse avec ou sans organes de traitement (34) du produit coupé.

## Claims

1. Agricultural machine comprising a harvesting mechanism (15) and at least one lightening and lifting device (37, 38; 90) intended, during work to lighten the said harvesting mechanism (15) and, for the purpose of transport, to lift the said harvesting mechanism (15), the said (each) lightening and lifting device (37, 38; 90) comprising a lifting ram (46; 93) mounted in parallel with an elastically deformable element (45; 92) fitted at least approximately coaxially on the said lifting ram (46; 93), the latter comprising:
- a cylinder (51; 97),
- a rod (52; 98) guided in the said cylinder (51; 97) and emerging from the said cylinder (51; 97) and
- a piston (54) mounted so that it can slide in the cylinder (51; 97) and dividing the cylinder (51; 97) into two separate chambers (55, 56), a first chamber (56) being intended to be supplied with fluid from a supply source (2) so as to translate the piston (54) in the cylinder (51; 97) to raise the said harvesting mechanism (15),
***characterized in*** that the said rod (52; 98), irrespective of its position, runs right through the interior space of the cylinder (51; 97) and in that the said piston (54) is detached from the said rod (52; 98) and mounted so that it can slide along the latter, the said rod (52; 98) comprising a stop (62; 101) against which the piston (54) is intended to bear in such a way:
- that, during work, the rod (52; 98) can slide in the cylinder without the stop (62; 101) of the said rod (52; 98) touching the piston (54), this allowing the elastically deformable element (45; 92) to function normally in order to lighten the harvesting mechanism (15)
and
- that, for transport, the piston (54) is brought into contact with the stop (62; 101) of the rod (52; 98) under the action of the fluid fed from the supply source (2), so as to displace the said rod (52; 98) with respect to the cylinder (51; 97) in order to lift the said harvesting mechanism (15).

2. Agricultural machine according to Claim 1, ***characterized in*** that the rod (52; 98) passes through the piston (54) and emerges on either side of the cylinder (51; 97).

3. Agricultural machine according to Claim 1 or 2, ***characterized in*** that the piston (54) has a cavity (88) intended to match the shape of the stop (62; 101) of the rod (52; 98) so as to obtain progressive contact between the said piston (54) and the said stop (62; 101).

4. Agricultural machine according to any one of Claims 1 to 3, ***characterized in*** that, at the end of the lifting travel, the piston (54) brings the stop (62; 101) of the rod (52; 98) against a longitudinal end (53; 99) of the cylinder (51; 97) which has a cavity (89) intended to match the shape of the said stop (62; 101), so as to obtain progressive contact between the said stop (62; 101) and the said cylinder (51; 97).

5. Agricultural machine according to any one of Claims 1 to 4, ***characterized in*** that the lifting ram (46; 93) is a double-acting ram, the two chambers (55, 56) of which are intended to be supplied with fluid from the said supply source (2).

6. Agricultural machine according to any one of Claims 1 to 5, ***characterized in*** that the stop (62; 101) is a collar, the shape and dimensions of which allow the heightwise displacement of the harvesting mechanism (15) to be damped during work.

7. Agricultural machine according to any one of Claims 1 to 6, ***characterized in*** that the elastically deformable element (45; 92) is a compression spring.

8. Agricultural machine according to Claim 7**, *characterized in*** that the compression spring is a gas spring (45; 92).

9. Agricultural machine according to Claim 8, ***characterized in*** that the gas spring (45; 92) comprises an elastically deformable envelope (47; 94) and two flanges (48; 95), one provided at each longitudinal end of this envelope.

10. Agricultural machine according to Claim 9, ***characterized in*** that the gas spring (45) additionally comprises a lateral stiffener (50) which surrounds the elastically deformable envelope (47).

11. Agricultural machine according to any one of Claims 8 to 10, ***characterized in*** that the gas spring (45; 92) also comprises a valve (49; 96) via which it can be inflated to the desired pressure.

12. Agricultural machine according to any one of Claims 8 to 11, ***characterized in*** that the gas spring (45; 92) is an air spring.

13. Agricultural machine according to any one of Claims 1 to 12, ***characterized in*** that the elastically deformable element (45; 92) is fitted between the rod (52; 98) and the cylinder (51; 97) of the lifting ram (46; 93).

14. Agricultural machine according to Claims 9 and 13, ***characterized in*** that one of the flanges (48; 95) is connected to the rod (52; 98) and the other of the said flanges (48; 95) is connected to the cylinder (51; 97).

15. Agricultural machine according to Claim 14, ***characterized in*** that the lightening and lifting device (90) comprises a safety device (102) preventing any risk of fluid fed from the supply source (2) from leaking into the gas spring (92).

16. Agricultural machine according to Claim 15, ***characterized in*** that the lightening and lifting device (90) comprises a ring (99) for guiding the rod (98), which guide ring (99) is fitted between the fluid fed from the supply source (2) and the gas of the gas spring (92), and in that the said guide ring (99) comprises, at the level of the rod (98), two successive seals (103, 104) between which there is an orifice (105) allowing fluid fed from the supply source (2) to escape if there should be a leak across the corresponding seal (104).

17. Agricultural machine according to Claim 16, ***characterized in*** that the said orifice (105) communicates with the atmospheric pressure.

18. Agricultural machine according to Claim 16 or 17, ***characterized in*** that the safety device (102) comprises a safety member (106) fixed in a sealed manner at one of its ends to the guide ring (99) and running between the gas spring (92) and the lifting ram (93) so as to discharge the fluid in complete safety in the event of any leak.

19. Agricultural machine according to any one of Claims 14 to 18, ***characterized in*** that the second chamber (55) of the lifting ram (93), which chamber is located in the region of the gas spring (92), is supplied via a duct (100) made inside the rod (98) and which opens out at the stop (101).

20. Agricultural machine according to Claim 19, ***characterized in*** that the said duct (100) starts at the flange (95) to which the rod (98) is attached.

21. Agricultural machine according to any one of Claims 1 to 20, ***characterized in*** that the elastically deformable element (45; 92) and the lifting ram (46; 93) form a single member (37, 38; 90) which has just two mounting points (84, 85, 86, 87).

22. Agricultural machine according to Claim 21, ***characterized in*** that at least one of the two mounting points (84, 85, 86, 87) comprises an elastic connection (42, 39, 44, 43).

23. Agricultural machine according to Claim 22, ***characterized in*** that the two mounting points (84, 85, 86, 87) each comprise an elastic connection (42, 39, 44, 43).

24. Agricultural machine according to any one of Claims 1 to 23, ***characterized in*** that it is intended to be connected to a motor vehicle (2) and that the said motor vehicle (2) has the said fluid supply source.

25. Agricultural machine according to Claim 24, ***characterized in*** that the cutting mechanism (15) extends, during work, transversely to the direction of work (23) and in that the said machine comprises:
- a hitching structure (3) intended to be connected to the hitch (6) of the motor vehicle (2),
- a first connecting device (16) connecting the cutting mechanism (15) to the hitching structure (3), this first connecting device (16) being connected to the cutting mechanism (15) at least approximately near to a first longitudinal end (18) of the said cutting mechanism (15) and allowing the said cutting mechanism (15) to pivot during work with respect to the hitching structure (3) about a forwards-pointing geometric axis (22A) as well as allowing heightwise movement of the cutting mechanism (15) with respect to the hitching structure (3),
- a wheel (14) arranged close to the second longitudinal end (24) of the said cutting mechanism (15) and running along the ground, the said wheel (14) being capable, during work, of pivoting about an upwards-pointing geometric axis (27A),
- a second connecting device (17) connecting the said wheel (14) to the cutting mechanism (15), this second connecting device (17) being connected to the cutting mechanism (15) at least approximately close to the second longitudinal end (24) of the said cutting mechanism (15) and allowing heightwise movement of the said cutting mechanism (15) with respect to the said wheel (14),
and
- two lightening and lifting devices (37, 38; 90) each one associated with a connecting device (16, 17) so that during work, the cutting mechanism (15) is lightened and so that during transport the cutting mechanism (15) extends over the ground at least approximately parallel to it.

26. Agricultural machine according to any one of Claims 1 to 25, ***characterized in*** that it is a mower with or without members (34) for treating the cut product.

## Patentansprüche

1. Landwirtschaftliche Maschine mit einem Erntemechanismus (15) und mindestens einer Entlastungs- und Hebevorrichtung (37, 38; 90), die im Betrieb den Erntemechanismus (15) entlasten und ihn im Hinblick auf den Transport artheben soll, wobei die bzw. jede Entlastungs- und Hebevorrichtung (37, 38; 90) einen Hubzylinder (46; 93) aufweist, der parallel zu einem elastisch verformbaren Element (45; 92) angebracht ist, das zumindest im wesentlichen koaxial mit dem Hubzylinder (46; 93) angeordnet ist, wobei letzterer
- einen Zylinder (51; 97),
- eine Stange (52; 98), die in dem Zylinder (51; 97) geführt wird und daraus herausragt, und
- einen Kolben (54), der in dem Zylinder (51; 97) gleitend angebracht ist und ihn in zwei verschiedene Kammern (55, 56) trennt,
umfaßt,
wobei eine erste Kammer (56) aus einer Versorgungsquelle (2) so mit Fluid versorgt werden soll, daß der Kolben (54) in dem Zylinder (51; 97) verschoben wird, um den Erntemechanismus (15) anzuheben,
***dadurch gekennzeichnet,*** daß die Stange (52; 98) sich unabhängig von ihrer Position quer durch den ganzen Innenraum des Zylinders (51; 97) erstreckt, und daß der Kolben (54) von der Stange (52; 98) getrennt und an dieser gleitend angebracht ist, wobei die Stange (52; 98) einen Anschlag (62; 101) aufweist, auf den sich der Kolben (54) stützen soll, so daß
- die Stange (52; 98) im Betrieb in dem Zylinder gleiten kann, ohne daß der Anschlag (62; 101) der Stange (52; 98) den Kolben (54) berührt, wodurch ein normaler Betrieb des elastisch verformbaren Elements (45; 92) zum Entlasten des Erntemechanismus (15) gestattet wird,
und
- der Kolben (54) im Hinblick auf den Transport unter Wirkung des Fluids aus der Versorgungsquelle (2) in Kontakt mit dem Anschlag (62; 101) der Stange (52; 98) geführt wird, um die Stange (52; 98) zum Anheben des Erntemechanismus (15) bezuglich des Zylinders (51; 97) zu verschieben.

2. Landwirtschaftliche Maschine nach Anspruch 1, ***dadurch gekennzeichnet,*** daß die Stange (52; 98) den Kolben (54) durchquert und auf beiden Seiten des Zylinders (51; 97) herausragt.

3. Landwirtschaftliche Maschine nach Anspruch 1 oder 2, ***dadurch gekennzeichnet,*** daß der Kolben (54) einen Hohlraum (88) aufweist, der sich an die Form des Anschlags (62; 101) der Stange (52; 98) anpassen soll, so daß ein allmählicher Kontakt zwischen dem Kolben (54) und dem Anschlag (62; 101) erhalten wird.

4. Landwirtschaftliche Maschine nach irgend einem der Ansprüche 1 bis 3, ***dadurch gekennzeichnet,*** daß der Kolben (54) am Ende des Hebewegs den Anschlag (62; 101) der Stange (52; 98) gegen ein Langsende (53; 99) des Zylinders (51; 97) führt, der einen Hohlraum (89) aufweist, der sich an die Form des Anschlags (62; 101) anpassen soll, so daß ein allmählicher Kontakt zwischen dem Anschlag (62; 101) und dem Zylinder (51; 97) erhalten wird.

5. Landwirtschaftliche Maschine nach irgend einem der Ansprüche 1 bis 4, ***dadurch gekennzeichnet,*** daß es sich bei dem Hubzylinder (46; 93) um einen doppeltwirkenden Zylinder handelt, dessen beide Kammern (55, 56) mit Fluid aus der Versorgungsquelle (2) versorgt werden sollen.

6. Landwirtschaftliche Maschine nach irgend einem der Ansprüche 1 bis 5, ***dadurch gekennzeichnet,*** daß es sich bei dem Anschlag (62; 101) um einen Bund handelt, dessen Form und Abmessungen es gestatten, im Betrieb die Höhenverschiebung des Erntemechanismus (15) zu dampfen.

7. Landwirtschaftliche Maschine nach irgend einem der Ansprüche 1 bis 6, ***dadurch gekennzeichnet,*** daß es sich bei dem elastisch verformbaren Element (45; 92) um eine Druckfeder handelt.

8. Landwirtschaftliche Maschine nach Anspruch 7, ***dadurch gekennzeichnet,*** daß es sich bei der Druckfeder um eine Gasfeder (45; 92) handelt.

9. Landwirtschaftliche Maschine nach Anspruch 8, ***dadurch gekennzeichnet,*** daß die Gasfeder (45; 92) eine elastisch verformbare Hülle (47; 94) und zwei Flansche (48; 95) aufweist, die anjedem ihrer Längsenden vorgesehen sind.

10. Landwirtschaftliche Maschine nach Anspruch 9, ***dadurch gekennzeichnet,*** daß die Gasfeder (45) darüber hinaus ein Seitenversteifungselement (50) aufweist, das die elastisch verformbare Hülle (47) umgibt.

11. Landwirtschaftliche Maschine nach irgend einem der Ansprüche 8 bis 10, ***dadurch gekennzeichnet,*** daß die Gasfeder (45; 92) des weiteren ein Ventil (49; 96) aufweist, durch das sie auf den gewünschten Druck aufgeblasen werden kann.

12. Landwirtschaftliche Maschine nach irgend einem der Ansprüche 8 bis 11, ***dadurch gekennzeichnet,*** daß es sich bei der Gasfeder (45; 92) um eine Luftfeder handelt.

13. Landwirtschaftliche Maschine nach irgend einem der Ansprüche 1 bis 12, ***dadurch gekennzeichnet,*** daß das elastisch verformbare Element (45; 92) zwischen der Stange (52; 98) und dem Zylinder (51; 97) des Hubzylinders (46; 93) angebracht ist.

14. Landwirtschaftliche Maschine nach den Ansprüchen 9 und 13, ***dadurch gekennzeichnet,*** daß einer der Flansche (48; 95) mit der Stange (52; 98) und der andere Flansch (48; 95) mit dem Zylinder (51; 97) verbunden ist.

15. Landwirtschaftliche Maschine nach Anspruch 14, ***dadurch gekennzeichnet,*** daß die Entlastungs- und Hebevorrichtung (90) eine Sicherheitsvorrichtung (102) aufweist, die dafür sorgt, daß kein Fluid aus der Versorgungsquelle (2) in die Gasfeder (92) dringen kann.

16. Landwirtschaftliche Maschine nach Anspruch 15, ***dadurch gekennzeichnet,*** daß die Entlastungs- und Hebevorrichtung (90) einen Ring (99) zur Führung der Stange (98) aufweist, wobei dieser Führungsring (99) zwischen dem Fluid aus der Versorgungsquelle (2) und dem Gas der Gasfeder (92) angebracht ist, und daß der Führungsring (99) in Höhe der Stange (98) zwei aufeinanderfolgende Dichtungen (103, 104) aufweist, zwischen denen eine Öffnung (105) vorgesehen ist, die gestattet, daß das Fluid aus der Versorgungsquelle (2) bei einem Leck durch die zugehörige Dichtung (104) entweicht.

17. Landwirtschaftliche Maschine nach Anspruch 16, ***dadurch gekennzeichnet,*** daß die Öffnung (105) mit dem atmosphärischen Druck in Verbindung steht.

18. Landwirtschaftliche Maschine nach Anspruch 16 oder 17, ***dadurch gekennzeichnet,*** daß die Sicherheitsvorrichtung (102) ein Sicherheitselement (106) aufweist, das mit einem seiner Enden dicht an dem Führungsring (99) angebracht ist und sich zwischen der Gasfeder (92) und dem Hubzylinder (93) erstreckt, so daß das Fluid bei einem eventuellen Leck vollkommen sicher abgeführt werden kann.

19. Landwirtschaftliche Maschine nach irgend einem der Ansprüche 14 bis 18, ***dadurch gekennzeichnet,*** daß die Versorgung der zweiten Kammer (55) des Hubzylinders (93), die sich in Höhe der Gasfeder (92) befindet, mittels einer Leitung (100) erfolgt, die im Innern der Stange (98) ausgeführt ist und in Höhe des Anschlags (101) mündet.

20. Landwirtschaftliche Maschine nach Anspruch 19, ***dadurch gekennzeichnet,*** daß die Leitung (100) in Höhe des Flansches (95), an dem die Stange (98) befestigt ist, beginnt.

21. Landwirtschaftliche Maschine nach irgend einem der Ansprüche 1 bis 20, ***dadurch gekennzeichnet,*** daß das elastisch verformbare Element (45; 92) und der Hubzylinder (46; 93) ein einziges Element (37, 38; 90) bilden, das nur zwei Befestigungspunkte (84, 85, 86, 87) aufweist.

22. Landwirtschaftliche Maschine nach Anspruch 21, ***dadurch gekennzeichnet,*** daß mindestens einer der beiden Befestigungspunkte (84, 85, 86, 87) eine elastische Verbindung (42, 39, 44, 43) aufweist.

23. Landwirtschaftliche Maschine nach Anspruch 22, ***dadurch gekennzeichnet,*** daß die beiden Befestigungspunkte (84, 85, 86, 87) jeweils eine elastische Verbindung (42, 39, 44, 43) aufweisen.

24. Landwirtschaftliche Maschine nach irgend einem der Ansprüche 1 bis 23, ***dadurch gekennzeichnet,*** daß sie mit einem Motorfahrzeug (2) verbunden werden soll, und daß das Motorfahrzeug (2) die Fluidversorgungsquelle aufweist.

25. Landwirtschaftliche Maschine nach Anspruch 24, ***dadurch gekennzeichnet,*** daß sich der Schneidmechanismus (15) im Betrieb quer zur Arbeitsrichtung (23) erstreckt und daß die Maschine:
- eine Kupplungsvorrichtung (3), die mit der Kupplungseinrichtung (6) des Motorfahrzeugs (2) verbunden werden soll,
- eine erste Verbindungsvorrichtung (16), die den Schneidmechanismus (15) mit der Kupplungsvorrichtung (3) verbindet, wobei diese erste Verbindungsvorrichtung (16) zumindest im wesentlichen in der Nähe eines ersten Langsendes (18) des Schneidmechanismus (15) mit letzterem verbunden ist und im Betrieb das Schwenken des Schneidmechanismus (15) bezüglich der Kupplungsvorrichtung (3) um eine nach vorne gerichtete geometrische Achse (22A) sowie eine Höhenverschiebung des Schneidmechanismus (15) bezüglich der Kupplungsvorrichtung (3) gestattet,
- ein Rad (14), das in der Nähe des zweiten Längsendes (24) des Schneidmechanismus (15) angeordnet ist und über den Boden rollt, wobei das Rad (14) im Betrieb um eine nach oben gerichtete geometrische Achse (27A) schwenken kann,
- eine zweite Verbindungsvorrichtung (17), die das Rad (14) mit dem Schneimechanismus (15) verbindet, wobei diese zweite Verbindungsvorrichtung (17) zumindest im wesentlichen in der Nähe des zweiten Längsendes (24) des Schneidmechanismus (15) mit letzterem verbunden ist und eine Höhenverschiebung des Schneidmechanismus (15) bezüglich des Rads (14) gestattet,
und
- zwei Entlastungs- und Hebevorrichtungen (37, 38; 90), die jeweils so einer Verbindungsvorrichtung (16, 17) zugeordnet sind, daß der Schneidmechanismus (15) im Betrieb entlastet wird und daß sich der Schneimechanismus (15) beim Transport zumindest im wesentlichen parallel über den Boden erstreckt,
aufweist.

26. Landwirtschaftliche Maschine nach irgend einem der Ansprüche 1 bis 25, ***dadurch gekennzeichnet,*** daß es sich um eine Mähmaschine mit oder ohne Elementen (34) zur Behandlung des Schnittgutes handelt.
